# EUROPEAN PATENT APPLICATION

(11) **EP 4 711 709 A1**
(43) Date of publication of application: **18.03.2026**
(21) Application number: 24199793.1
(22) Date of filing: 11.09.2024
(51) Int. Cl.: G01C 15/00, G01S 17/89

(54) **OPTO-ELECTRONIC SCANNING MEASURING INSTRUMENT AND METHOD WITH TEMPERATURE COMPENSATION**

(71) Applicant: Leica Geosystems AG, 9435 Heerbrugg (CH)
(72) Inventor: ISELI, Claudio, 9434 Au (CH); SEUFFERT, Julian, 88239 Wangen im Allgäu (DE); MICHEL, Vincent, 9436 Balgach (CH)
(74) Representative: Kaminski Harmann

(57) **Abstract**

The invention relates to a method and opto-electronic scanning measuring instrument (1) for in-line compensation of thermal influences on the opto-electronic scanning measuring instrument (1) by adapting a set of instrument's parameters associated with a defined reference thermal state of the instrument (1) in dependence on an actually measured thermal state of the instrument (1), sensed by thermal sensors (6a-6d) of the instrument (1), and calculating the respective object point coordinate based on the compensated parameter set.

## Description

The present invention relates to an opto-electronic scanning measuring instrument and method therefore according to the independent claims.

Generating point clouds is used for measuring many different geodetic or industrial settings. The surveys achieved therewith may be used to obtain accurate three-dimensional (3D) models of a setting, wherein the models consist of point clouds. Such scanning is a very effective technology for producing millions of spatial measurement points of object surfaces within a scan sphere within minutes or seconds. Terrestrial laser scanning technology is in particular used to collect static coordinative data of fixed non-moving natural or man-made structures or scenes of non-moving man-made objects (e.g., crash sites). Typical measurement tasks are the recording of objects or the surfaces thereof such as industrial plants, house facades or historical buildings, but also accident sites and crime scenes.

The points of such a point cloud are stored by coordinates in a coordinate system, which may be defined by a measuring instrument which recorded the point cloud. Usually, the surveying instrument constitutes the origin of the coordinate system by an instrument centre, in particular by the so called nodal point of the surveying instrument. The points are usually surveyed by associating a distance measured with a laser beam with the alignment under which the distance was measured, i.e. the targeting or measuring direction.

Common surveying instruments comprise at least one radiation source or emitter for generating optical measurement radiation, often laser radiation, and optical means, including a deflector such as a rotating mirror, by means of which the generated measuring radiation can be emitted in free space onto a target or object to be measured, because of which these devices are also referred to as so-called free beam sensors. Optical measurement radiation is understood in this case as electromagnetic radiation, not only in the visible range of the spectrum, but rather also radiation in the ultraviolet, in the infrared, and in the terahertz range. Laser scanning instruments are known which use measuring radiation having a wavelength of 405 nm, 532 nm, 635 nm, 650-690 nm, 780 nm or 785 nm, 795 nm, 808-850 nm, 905 nm, 980 nm, 1064 nm, or between 1500 and 1570 nm.

Usually, these surveying instruments furthermore comprise means to rotatably alter the direction of the free beam. Commonly, a vertical rotation axis and a horizontal rotation axis are provided for change of the measuring or targeting direction, wherein the actual rotational position of each axis are sensed with respective angle sensors. Usually, the rotation of the vertical axis is measured by an azimuth angle and the rotation of the horizontal axis is measured by an elevation angle. If the surveying instrument is embodied as a laser scanner, one of said axes, commonly the azimuth axis, may be a slow axis and the other one -the elevation axis- a fast axis.

More particularly and in terms of the fundamental structure, such laser scanners are thus designed to deflect a measurement beam in one spatial direction by rotating aforementioned deflector about one axis (elevation axis) and -independent therefrom- in another spatial direction by rotation of a top part or body, comprising or supporting the deflector part, about a second axis (azimuth axis). Said body is for example rotatably mounted to a base comprising a tripod for stationing the laser scanner at a known, referenced location.

As a result, a spatial measurement region -the scan sphere-can be recorded. The scanning wide in the horizontal is here frequently 360°, i.e. one full circle about the azimuth axis, and in the vertical for example 180°, i.e. a half circle about the elevation axis. The result is that one hemisphere is covered, which together with a maximal measurement distance define the measurement space or scan sphere.

The distances to a respective object surface point may be calculated with the travel time measurement (time-of-flight) method by observing the time between sending out and receiving a signal. Other methods such as using phase measurements are also known in the art. The alignment angles are achieved with said angle sensors arranged at the azimuth axis and at the elevation axis. Hence, the measurement of point coordinates is usually effected with determination of distance and angles, that is to say in spherical coordinates, such that an object point is characterised by a distance value, an elevation angle and an azimuth angle with reference to the origin of the coordinate system. However, other coordinative representations or transformations are also known, such as Cartesian coordinates which are in particular advantageous for display and further processing.

For fast and accurate scanners in particular a short measurement time in conjunction with high measurement accuracy of point coordinate is required. For example, a distance accuracy in the mm range or below with measurement times of the individual points in the sub-microseconds to milliseconds range is desirable whereby the measurement range can vary from a few centimeters up to a few kilometers.

Regarding accuracy of measuring direction, an angular accuracy of a few seconds is desirable. This demands high precision of assembly resp. a highly accurate calibration for preventing measurement errors by imperfections of assembly. Particularly between the instrument's parts or components which are rotatable relative to one another, a high precision is required. Methods for determination of precise calibration of measurement parameters of a scanning measuring instrument are known in the art.

However, there are internal or environmental influences on the instrument after calibration such as aging or thermal influences which induce a shift of size or position of the instrument's components with the result that the calibration parameters do not comply any more to the actual condition of the instrument and therewith, measurement accuracy is reduced. Hence, a re-calibration is needed for generating new calibration parameters. Though calibration methods are known which can be executed in the field such that an elaborate factory calibration is not mandatory, even such field calibration requires specific knowledge of the operator and a considerable amount of time for execution.

It is also known in the art to reduce internal or environmental influences on the instrument and thus reduce impacts on the accuracy of coordinate measurement evolving therefrom. For example, the US 2013010307 A1 refers to a laser scanner which is furnished with a cooling device for dissipation of heat generated by the motors for rotating the measuring head and the deflection mirror, as well as heat generated by the electric currents of the control and evaluation unit and the further electrical or electronic components.

However, implementation of a cooling device renders the measuring instrument more complicate, demands additional electrical power which is in particular disadvantageous for stand-alone devices used in the field, such as terrestrial laser scanners or scanners mounted on mobile measuring platforms (UAVs/measuring drones or UGVs/robotic measuring vehicles), with limited battery capacity (and constitutes also another heat source within the instrument itself) and is not able to completely cancel out thermal influences within the instrument, let alone by temperature changes induced by the environment.

It is therefore an object of the present invention to provide an improved scanning measuring instrument and a method therefore.

It is particularly an object to provide a scanning measuring instrument and method therefore with compensation of thermal influences.

It is further an object to provide a scanning measuring instrument and method therefore with a pinpoint and very precise compensation of thermal influences on the accuracy of measured object point coordinates.

It is further an object to provide a scanning measuring instrument and method therefore with an in-line or real-time compensation of thermally induced measurement errors during scanning.

At least one of these objects is achieved in accordance with the invention by the features of the independent claims or by features of the dependent claims, and these solutions are also developed by features of the dependent claims.

The present invention relates to a method for in-line or real-time compensation of thermal influences on an opto-electronic scanning measuring instrument, which method can be executed by a control and processing unit of a scanning measuring instrument as claimed.

The method comprises the automatic steps of swivelling an instrument's optical free beam over object surfaces to be scanned for measuring a respective coordinate of a multitude of surface points (based on a distance to a respective object point sensed with the free beam in known measurement direction), preferably for geodetic and/or industrial measuring of stationary objects.

The method comprises further providing a set of instrument's parameters associated with a defined reference thermal state of the instrument, such as a reference temperature field. The set can comprise instrument's parameters which are calibrated or gauged in the reference thermal state, for instance in course of a factory calibration or a field calibration, using calibration standards or gauges or other calibration methods known in the art. Additionally or alternatively to calibrated parameters, the parameters are simply defined on convention, e.g., setting a parameter to a defined value, e.g., zero, at a reference thermal state, e.g. at a temperature of 20°C.

The method further comprises measuring a current or actual thermal state of the instrument and determining a difference between the current thermal state, in particular a current temperature field, and the reference thermal state.

The method further comprises estimating a compensational parameter set starting from the provided initial parameter set and based on the difference of thermal states, using a compensation model, which may comprise a compensation coefficient matrix, and calculating the respective object point coordinate based on said determined compensational parameter set.

As an option, there is providing a thermal state history of the instrument comprising at least one previous thermal state and basing said estimating of a compensational parameter set on the thermal state history as input to the compensation model.

Thereby, there can be an automatic measuring of the at least one previous thermal state and computing the thermal state history before measuring of object points while the instrument is in an off-mode. Alternatively or additionally, the measuring of thermal states is executed with a lower measuring rate before measuring object points or before scanning compared to a higher measuring rate during measuring of object points or during scanning.

Thereby, the previous thermal state and the reference or actual thermal state may differ in their characteristics or definition. For instance, the temperature field of a thermal state of the state history can be of different, preferably lower extent or density or can comprise fewer temperature sensing locations or areas as the reference or actual thermal state. For example, only a reduced number of temperature sensing points of instrument's measurement components are included, i.e. a sparse or thinned out thermal monitoring of instrument's components, e.g., skipping some of the installed thermal sensors or components. A thermal state history of slimmer or reduced thermal states compared to the reference or actual thermal states allows for a reduced effort for thermal data acquisition, processing and storing, which is in particular advantageous in said optional case of an automatic measuring in an off-mode of the instrument.

As another option, the method for coordinative scanning comprises providing at least two different compensation models and/or calibrated parameter sets which are applicable for different operational stages and/or different ranges of current thermal states of the instrument such as a warm-up stage.

As still another option, the compensation model is based on machine learned association of compensational parameters and thermal states, whereby the compensation model may be configured to be trainable while operating the measuring instrument in the field, which may enable to adapt or optimize a compensation model to a respective individual measuring instrument.

The present invention also relates to an opto-electronic scanning measuring instrument for scanning of surfaces of stationary, preferably geodetic and/or industrial, objects by measuring respective coordinates of a multitude of surface points.

The instrument comprises a base, a radiation source configured for generating optical measurement radiation, a deflector such as a rotatable mirror configured for emitting the measurement radiation in form of a free beam in a measuring direction onto a respective surface point, at least one drive for rotating the deflector relative to the base with respect to at least one axis for swivelling the free beam over the object surface, which swivelling can be based on one or more stored scan patterns and at least one angle meter for determining a current rotational position of the deflector relative to the base with respect to the at least one axis, indicative of the current measuring direction.

The instrument further comprises a receiver configured for detecting reflected measurement radiation reflected back from the respective surface point and deflected onto the receiver by the deflector and a control and processing unit configured for calculating a respective point coordinate based on a distance derived from detected measurement radiation, e.g. using a time-of-flight principle, and on the current measuring direction, measured by said angle meter.

Further, the measuring instrument comprises a set of sensors for sensing at least one respective temperature of a respective component of one of multiple components of the measuring instrument which components influence the measuring of the surface point coordinates. Such measuring components include instrument parts which influence the measuring direction and/or the determination of the current measuring direction and/or of the object point distance. Examples for such instrument components are mechanical supports of the radiation source or units of the optical measurement path such as lenses or mirrors, frame structures or measuring units (or parts of them) such as angle meter/encoder or optical receiver.

The instrument also has a memory having stored a compensation model and a, particularly calibrated, set of measuring component related parameters associated with a defined reference temperature of a respective component.

Above that, the control and processing unit is configured for feeding the compensation model with temperatures sensed with said sensors during a scanning procedure and, using the compensation model, estimating a compensational parameter set starting from the stored parameter set based on a difference of the sensed temperature to the respective or associated reference temperature, and finally calculating the respective object point coordinate based on the compensational parameter set.

Said temperature sensors can be distributed within the instrument as required such that they can measure a distributed thermal state and especially thermal gradients within the instrument and/or at locations / components which are relevant for the point coordinate measurement, in particular relevant to the final beam direction of the emitted measurement radiation. The sensor set can comprise a contactless temperature sensor, in particular a self-calibrated point infrared sensor, in particular for sensing a temperature of movable components such as said beam deflector.

In some embodiments of the scanning measuring instrument or method, said calculating of the respective object point coordinate comprises a correction of a respective raw object point scan data based on the determined compensational parameter set, whereby "raw" object point scan data also comprises pre-processed scan data such as sensor data which has undergone usual data clearing up or improvement steps such as a filtering, smoothing or amplification or the like.

As another option, said set of measuring component related parameters associated with a defined reference temperature of a respective component comprises calibrated parameters calibrated at the reference temperature. Also, a calibration can improve the parameter set further and such correction is applied all time in future until another calibration, e.g. in the field, updates these correction again.

In another embodiment, the instrument is designed for swivelling the beam with respect to an azimuth axis as said first axis and with respect to an elevation axis as second axis. Thereby, the sensor set comprises at least one sensor for sensing temperatures affecting the measuring direction with respect to the azimuth axis and the elevation axis and the parameter set comprises parameters for compensation with regard to the azimuth axis and to the elevation axis based on the sensed temperatures. Preferably, the instrument comprises at least a first sensor for sensing first temperatures (of instrument's components) affecting the measuring direction with respect to the azimuth axis and at least a second sensor for sensing second temperatures affecting the measuring direction with respect to the elevation axis and the parameter set comprises first parameters for first compensation with regard to the azimuth axis based on the first temperatures and second parameters for second compensation with respect to the elevation axis based on the second temperatures.

Additionally or alternatively, the control and processing unit is configured for estimation of compensational parameter sets individually for separate or individual regions or zones of scanned surface points, for instance single scan lines or a certain number of adjacent scan lines, based on temperatures sensed and/or interpolated at a time of measuring a respective scan region.

In still other embodiments, the compensation model comprises a kinematic model of the instrument modelling the kinematic chain at least from the base to the deflector and the parameter set comprises kinematic parameters of the kinematic model. The kinematic parameters can for example comprise angular parameters, which may be based on nominal construction data and/or a numerical simulation of the instrument.

Additionally or alternatively, the control and processing unit is configured for compensation of temperature hysteresis effects on parameters, whereby the compensation model comprises a function representing past or previous temperatures sensed by at least some of the sensors of the sensor set. As a further option, only temperatures above a defined temperature difference threshold are considered as past temperatures (any variation in temperature within the threshold interval is not taken into account or not logged).

In some embodiments, the control and processing unit is configured for automatically determining a confidence value of the compensational parameter set and triggering acquisition of a new calibrated set of parameters associated with a new reference thermal state by manual and/or automatic in-the-field calibration if the confidence value is below a threshold. Thereby, the confidence value can take into account at least one of a sensed temperature, a hysteresis of sensed temperatures, a difference of sensed temperatures between different sensors (temperature gradient) and/or difference to reference temperatures, or a statistical evaluation over time and/or over location of sensed temperatures.

The present invention also relates to a computer programme product comprising programme code which is stored on a machine-readable medium, or being embodied by an electromagnetic wave comprising a programme code, and having computer-executable instructions for performing, in particular when run on the control and processing unit of the opto-electronic scanning measuring instrument as claimed, the method for in-line temperature compensation as claimed.

The inventive method, measuring instrument and computer programme product enables an improved scanning of object surfaces, in particular for geodetic or metrological applications wherein improved precision of point coordinate determination is of high importance. The present invention provides high scan or point cloud accuracy despite change of temperature or thermal state of the measuring instrument by application of compensation or correction in dependence on a degree of change of temperatures or thermal state, using a compensational parameter set determined in dependence thereon, and using a referential parameter set and a compensation model for calculation.

In the following, the invention will be described in detail by referring to exemplary embodiments that are accompanied by figures, in which:
- Figs. 1a-c:: show schematically an exemplary opto-electronic scanning measuring instrument, in the example embodied as a laser scanner;
- Fig. 2:: schematically illustrates a change of a measurement parameter of an opto-electronic scanning measuring instrument caused by a change of temperature;
- Fig. 3:: illustrates a set of thermal sensors arranged within an exemplary opto-electronic scanning measuring instrument;
- Fig. 4:: shows in form of a flow diagram a method of calculation of scan points with temperature compensation;
- Fig. 5:: schematically illustrates another example of scan point compensation based on sensed instrument thermal states;
- Figs. 6a,b:: show schematically a result of the above described compensation of temperature influences by using compensation parameter sets; and
- Fig. 7:: schematically illustrates a consideration of a history of thermal state of the instrument.

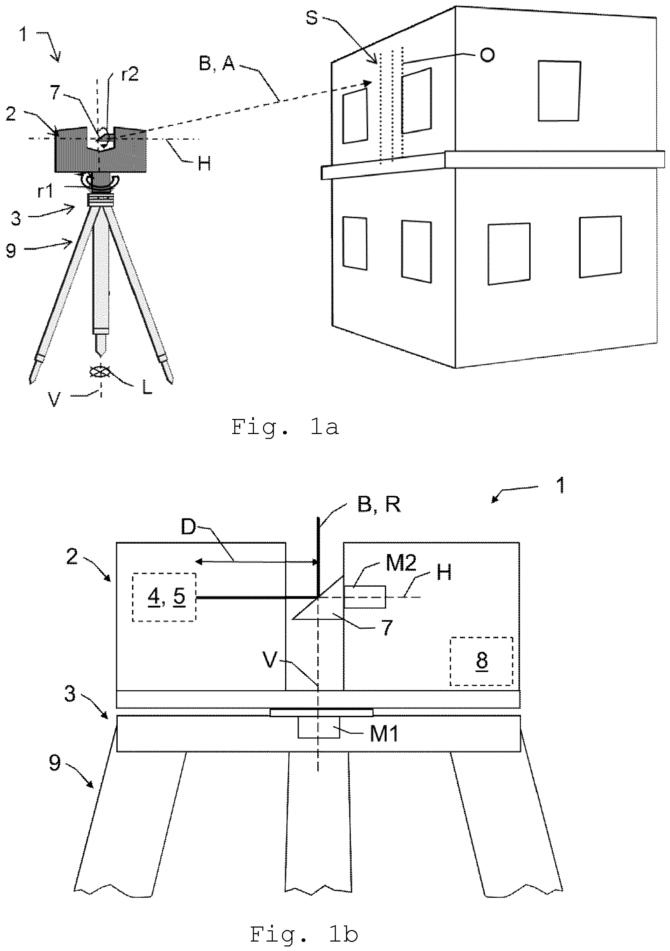

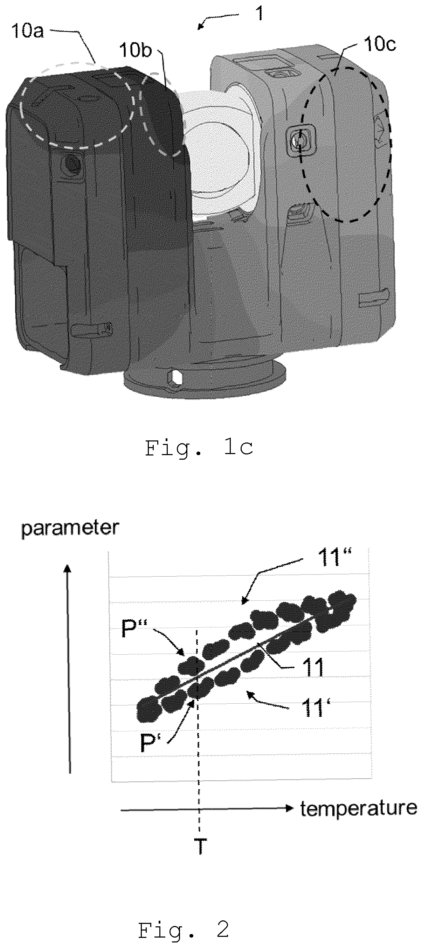

**Figs. 1a,b****,****c** show schematically an exemplary opto-electronic scanning measuring instrument, in the example embodied as a laser scanner 1, for generation of point clouds representing objects within a scan space which is in the example an outdoor setting. Figure 1a shows the scanner 1 within the setting whereas figure 1b shows a more detailed view of the scanner 1 and figure 1c illustrates a thermal image of a scanner 1.

The exemplary stationary laser scanner comprises a body or upper or top part 2 and a base 3. As depicted, the base 3 can be mounted on a tripod 9 for stationing such a terrestrial scanner 1 within the environment at a location L. The body 2 comprises a distance measuring unit having an emitting unit 4, a receiving unit 5, and a beam directing unit or deflector 7, wherein emitting unit 4 and receiving unit 5 are combined as one part in this example; they may however be embodied by according separate components, e.g. in combination with a beam splitter.

A first change of measuring direction is achieved by a controlled, motorized relative rotation between body 2 and base 3 around a first, azimuth or vertical axis V as a first rotation (rotation indicated in the figure by arrow r1), using a first drive or motor M1. In the example, a second rotation (indicated in the figure by arrow r2) is achieved by the deflector 7, e.g. a mirror, mounted in the body 2 such that it is rotatable around a second, elevation axis H by a second drive or motor M2. While rotating, the directing unit 7 is deflecting a radiation beam coming from the emitting unit 4 as a free beam B along an alignment or line of sight or measuring direction A into the measurement space towards object surface points to be scanned. The respective angular position about the azimuth and elevational axis each or in short the current targeting or scanning direction A can be determined by respective angular encoders (not shown). By rotating r2 the mirror 7 about the transverse axis H, the elevational scanning direction can be altered and the measuring beam can be guided in vertical fashion over an object's surface while the azimuth direction can be altered and the beam can be swiveled by guiding it horizontally over the surface by rotating r1 the entire upper part 2 about the azimuth axis V. Hence, the scan direction is continuously changed, for instance in accordance with a known or defined scanning pattern of multiple scan lines S side by side, as roughly indicated in figure 1a.

The extent of rotation about one or more axis H and/or V and the (maximal) measurement distance define the extent of the setting. Often, a so called full-dome scan is performed, meaning a scan sphere about the full rotation in the horizontal with an angular range in the vertical of e.g. 270° with a maximal distance of some tenth meters, a hundred meters or several hundred meters so that a spherical range is provided, which depicts almost the entire surrounding up to the maximal range in all spatial directions. However, arbitrary other angle ranges are also possible.

After the reflection of the free beam B on the target object surface, the received beam R is guided in the optical beam path by the rotatable beam deflection unit 7 towards the receiving unit 5 and through further optical means such as lenses or mirrors (not shown) onto an optical sensor or receiver such as an APD diode (not shown) for e.g. time-resolved detection of the measuring radiation. The distance to the object point O can be determined from a time of flight of a (pulsed) measurement light or other methods in principle known in the art, such as phase measurement.

A control and evaluation unit 8 is data-connected to the sensor resp. to the radiation emitter 4 and a radiation receiver 5 of the scanner 1 as well as above mentioned angular encoders. In the shown example, such a data processing and device controlling computer 8 is comprised by the instrument's housing 2, in particular in connection to a permanent data memory or storage (not shown). The computer and memory may, however, also be external to the laser scanner 1, e.g. embodied by a cloud computer having permanent wireless connection to the laser scanner 1. The computer 8 is configured to control the mentioned components of the laser scanner 1 and to perform the steps of the method according to the invention. The control and evaluation unit 8 is in particular embodied to determine, for a multiplicity of measurement points, the distance between the laser scanner 1 and a respective scan point O of the measurement object surface O. Together with the determined scanning / measuring direction or angular axes values, in this case a three-dimensional coordinate of a respective scan point O can be precisely ascertained, which may be stored as a point cloud in said memory.

In addition to the ascertained distance associated with a direction resp. 3D-coordinate from the laser scanner 1 (or from the origin of the reference system resp. in relation to the station point L), each scan point may in addition have a brightness or intensity value, which is likewise ascertained by the control and evaluation unit 8. The brightness is a greyscale value which is ascertained, for example, by integrating the band-pass-filtered and amplified signal of the radiation receiver over a measuring period assigned to the measurement point P. These values can form an intensity image of the scan.

A point set comprising individual object or scan points O are thus measured, i.e. their respective spatial coordinate is determined, wherein the respective distance to the scan point and the respective alignment of the scanning direction in relation to two measurement axes H, V (current horizontal and vertical beam emission direction) or two angles are determined. The scanning process thus produces a point set containing three-dimensional information about the surface of the scanned objects such as building O. The totality of the measurement points of such a measurement is referred to as the scan and may yield a 3D-point cloud. The pointwise 3D-data or 3D-information, e.g. as Cartesian coordinates or as a point distance grid (for example derived from such 3D-coordinates or directly generated from the raw measurement data), which point distance grid maps the measured point distances in dependence on the respective scanning direction, can be stored as a depth layer of a point cloud. Likewise, the intensity data associated with the measures object points can be stored as an intensity layer of the point cloud.

A display apparatus (not illustrated here), which can be configured as a display screen directly on the operative laser scanner 1 or as a display of a connected computer, e.g. a handheld device or desktop computer, can be connected to the control and evaluation unit 8 for showing the acquired point cloud to a user. Also, a colour camera (not shown), in particular a wide-angle camera, a panoramic camera, a spherical camera or similar, can be arranged in the housing 2 that allows additional color values to be assigned to the measurement points O to provide a textured or colorized point cloud.

When operating the instrument 1, the electrical or electronic units such as motors M1, M2, computer 8, laser source 4, display, a camera and PCBs (not shown) become heat sources. In addition, external or environmental heat fluxes, e.g. the general ambient temperature or impinging sun radiation, influence the temperature of the instrument 1 or parts of it.

As indicated in figure 1c by the different nuances of grey, the scanner 1 is warmed up during operation whereby different parts or components of the scanner 1 differ in temperature. Three such different temperature zones 10a-10c are marked in the figure by different grey tones for exemplary illustration: the scanner part 10b in the middle has a higher temperature than the region 10a on the left upper side which has a higher temperature than the scanner part 10c at the right housing side.

Any generated heat or thermal current, by internal or external heat sources or sinks, changes the thermal state of the instrument 1 and in particular influences structural dimensions and/or a position or orientation of components such as mirror 7, beam source 4 or detecting unit 5. For example, the distance D resp. the length of the optical beam path between deflector 7 and the laser source 4 / light sensor 5 is altered as indicated in figure 1b. Also, initial angular positions or alignments of measurement components or structures such as the whole top part 2 are subject to thermal expansion, for instance resulting in a shift of the azimuth axis V relative to the elevation axis H (resp. of components placed and oriented according to the axes V, H), e.g. a deviation from the nominal 90° in between (or rather, a different value or deviation from a nominal value than deduced and stored by calibration).

At the end, dimensions or alignments of measurement components are changed which influence the measurement result in form of the surface point coordinate. In other words, the accuracy of object point measurement is reduced as components resp. parameters of the scanner 1 relevant for measuring are deviating from the actual situation or condition of the instrument 1.

Said instrument parameters are calibrated in a certain thermal state of the instrument 1 which seldom equals to but rather differs from its current thermal state, hence, the parameter values as calibrated and available mismatch with the actual, real state of the measuring device 1. The problem exacerbates because -as already mentioned and indicated in figure 1c- any temperature change is not equal for different parts of the scanner 1 but one component may have a different change of temperature than other ones.

In addition, as a scan of an environment takes some time during which the thermal state of the instrument 1 may not be stable but may change, the real instrument values at different points in time while scanning may not only differ from the calibrated parameters but also from another. For example, a dimension or position of a measuring component changes from begin of scan to its end, for instance because of a warm-up phase of the instrument, changing processing activities or unstable ambient conditions. Hence, deviations of the stored parameters underlying object point coordinate calculation from the real parameter values can fluctuate during a scanning procedure or from scan point or region to other scan points or regions.

**Fig. 2** schematically illustrates above mentioned change of a measurement parameter of a scanning measuring instrument caused by a change of temperature. The black spots 11', 11'' indicate discrete parameter values whereas the line 11 indicates an overall trend.

As can be seen from the trend line 11, the parameter generally increases with increasing temperature or increasing change of the thermal state of the scanning instrument and accordingly decreases with decreasing temperature. Thus, the trend line 11 illustrates the general problem of instability of measuring parameter in view of thermal influences.

The more specific points 11', 11'' illustrate a further problem, namely the occurrence of a hysteresis. That is, the change of parameter when increasing temperature as indicated by spots 11' differs from the change of parameter (spots 11'') when decreasing temperature. Hence, at one and the same temperature T, different values P' or P'' are present, depending on the course of temperature (warm-up phase or cooling phase). Hence, a difference of the real values from the calibrated ones is not only dependent on an actual thermal state or distinct temperature but can also depend on a temperature development.

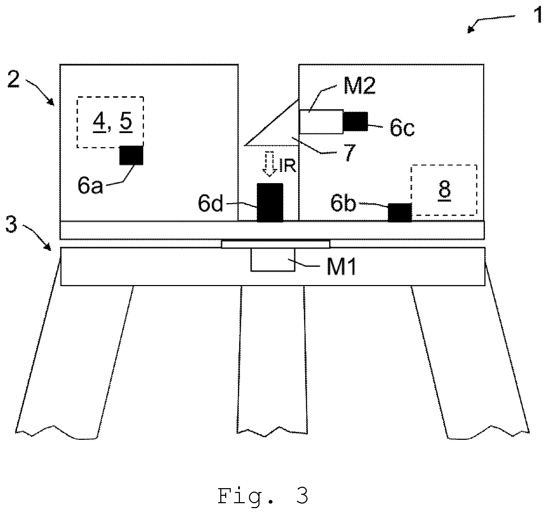

**Fig. 3** shows, based on figure 1b, the scanner measuring instrument 1 now equipped with a set of thermal sensors 6a-6d. The sensors 6a-6d are distributed in the example within or at the housing of the instrument 1, attached to or nearby measuring relevant components.

As indicated in figure 3, a first temperature sensor 6a is located at the distance measuring unit resp. near emitting unit 4 and receiving unit 5, a second sensor 6b at the instrument's frame, in the example near the processing unit 8 (resp. a processor board or PCB), and a third sensor 6c at the motor M2.

A fourth sensor 6d is located near deflector 7, preferably as close as structurally possible. In the example, this sensor is embodied as an infrared (IR) sensor, such as a self-calibrated point-infrared sensor. Such a contactless temperature sensor is in particular advantageous for detecting temperature of a moving or rotating component such as exemplary rotating mirror 7. Self-calibration is applied because thermal values are indirectly deduced out of an emissivity coefficient which depends on the inspected surface. This self-calibration has to be based on known thermal state of this rotor or more generally spoken of the targeted instrument's component/portion (at least compared to other states within the instrument). Preferably, the inspected surface, here the mirror surface, is designed to show a minimized infrared mirroring or reflectance, e.g. by optical coating.

In any case, thermal sensors 6a-d, e.g. with an absolute accuracy in the range of 0.1 K, are distributed on or in the structure of the laser scanner 1 in order to determine a temperature distribution in the laser scanner 1. Thus, an actual temperature field or current thermal state of the instrument 1 can be sensed. Said otherwise, accurate thermal sensors are distributed e.g. on PCBs within the instrument and directly on the instrument (e.g. structural parts, cases) near to locations where the thermal state has an effect on the accuracy of measured points / point clouds for sensing actual temperatures, in particular during a scan with the instrument 1.

Thereby, the number of applied sensors 6a-d can vary from the exemplary number of four; e.g., can be in the range up to twenty sensors, for example ten or sixteen sensors, such as three sensors arranged for monitoring temperatures of components relevant for the elevation axis, two sensors arranged for monitoring temperatures relevant for the azimuth axis, three more sensors for sensing temperatures of the laser / distance measuring components and four more sensors for surveillance of temperatures of the central frame of the scanner 1.

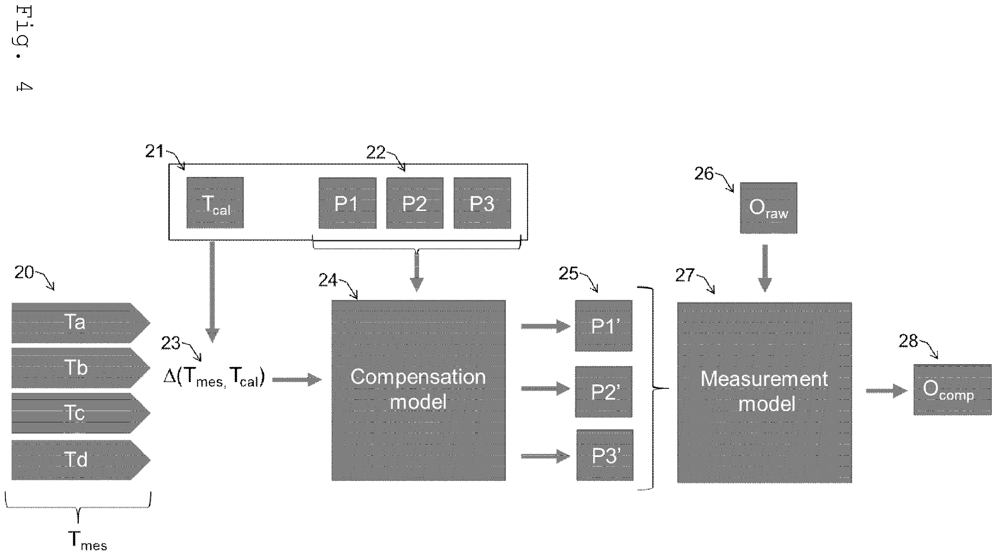

**Fig. 4** shows in form of a flow diagram a method of calculation of scan points with temperature compensation resp. compensation of change of thermal state.

As depicted first, the current thermal state Tₘₑₛ (ref. no. 20) of the instrument is derived, described by the temperatures Ta, Tb, Tc, Td measured with instrument's thermal sensors 6a-6d (see fig. 3). This current thermal state 20 is compared to a stored reference thermal state T_{cal} (ref. no. 21), provided by a memory of the instrument, resulting in a difference Δ(Tₘₑₛ, T_{cal}) (ref. no. 23) .

This difference 23 between a referential thermal state 21 and an actual thermal state 20, Δ(Tₘₑₛ, T_{cal}), sensed by the thermal sensor set of the instrument, is used as input to a compensation model 24. Further, calibrated parameters P1-P3 (ref. no. 22) are inputted to the model (the number of three instrument parameters is only for exemplary purposes). These values 22 are associated to the reference thermal state 21, in particular calibrated at well-defined reference temperatures which can be compared to actual temperatures of measuring components.

Based on the referential parameters 22 and on the thermal difference 23, using the compensation model 24, compensational parameters P1'-P3' (ref. no. 25) are determined.

A compensation model 24 can for instance be a numerical or simulation model, e.g. a digital twin, of a scanning instrument (e.g. based on a CAE-model and/or FEM-techniques) which can be parameterized, e.g. in form of a coefficient matrix, for adjusting kinematic parameters of the instrument directly, or using regression algorithms.

This model 24 be based on thermal investigations of several real instruments. Alternatively or additionally, multiple datasets of real instruments covering different use cases can be generated and models can be trained directly on this measuring data. For example, a compensation model 24 can be trained on antipodal measurements in well-defined thermal environments with one (for individual) or several instruments to get instrument generic compensation (based on a factory calibration), field calibrations in several thermal environments over one or several instruments (collecting over a certain time period or continuously field calibrations information comprising raw measurements, reference thermal states and estimated kinematic parameters, using instrument specific data for updated training and parametrization of a compensation model 24) and/or synthetically generated data by numerical simulation of an instrument applied to several and well-defined thermal environments, whereas numerical simulation is matched against reality using measurements.

Then, raw scan data O_{raw} (ref. no. 26) is fed into a measurement or kinematic model 27, preferably modelling the complete kinematic chain or row from base to end of optical beam path or all targeting direction related components, which makes use of said compensational parameters 25 to calculate final compensated scan data O_{comp} (ref. no. 28). Hence, compensation is applied when processing the raw measurement data 26 of an object point for computation of a resulting compensated point coordinate 28, whereby the processing can comprise basic data refinement as known in the art such as filtering, condensing or removal of outliers. The compensational parameter set 25 replaces or corrects an initial calibrated parameter set 22 for calculation of point coordinates respectively calculation of a point cloud. Said otherwise, a couple of scanner calibration parameters are continuously (with a certain rate) compensated or corrected, based on environment sensor data to maintain accuracy in the field.

Thereby, a compensation model 24 and measurement model 27 of the opto-electronic instrument, which are shown in the purely exemplary embodiment of figure 4 as separate entities, can be embodied as a combined or single model, e.g. a kinematic model for compensation of an angle between azimuth and elevation axis, distance between azimuth axis and elevation axis, angles between laser and elevation axis, translation of laser in elevation frame, elevation axis angle offset, angle between parabola vertex and elevation axis and translation of mirror along elevation axis.

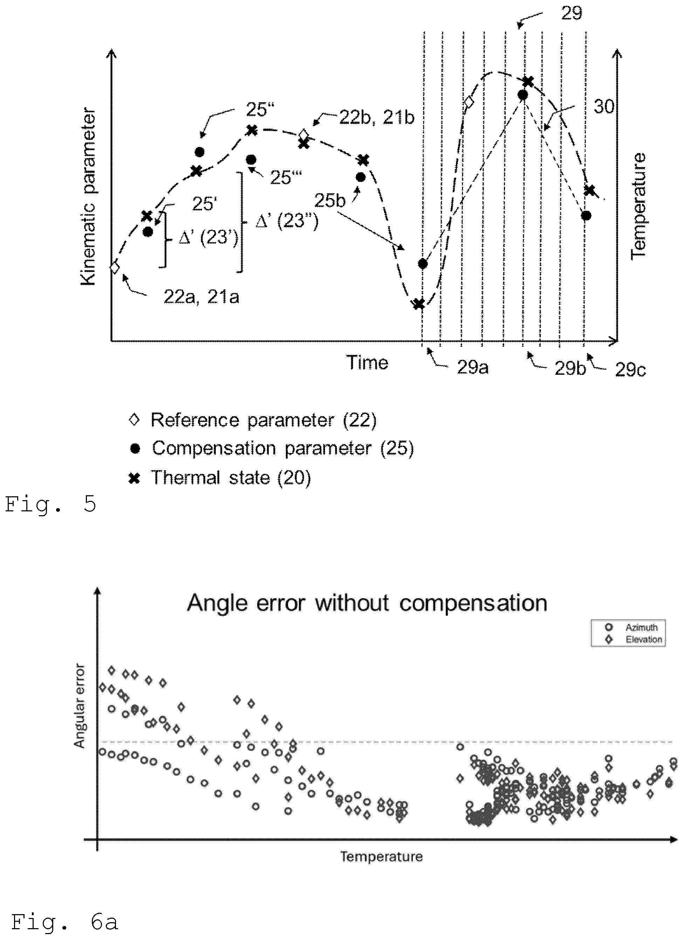

**Fig. 5** schematically illustrates another example of scan point compensation based on sensed instrument thermal states.

In the example, instrument's kinematic parameters and thermal state / temperature in course of time is depicted. As can be seen, starting from a first reference parameter (or parameter set) 22a, a first compensational parameter 25' is computed, based on a sensed actual difference of thermal state 23.

Based on the current thermal state 20 (resp. the current difference 23 to a reference state 21), a respective compensational parameter 25 is determined, using above described compensation model.

Thereby, temperatures of relevant components are repeatedly sensed with a certain measurement rate which allows to determine the instrument's actual thermal state 20 in course of time and derive respective compensation parameters 25 adapted thereto, starting from calibrated parameters 22.

For example, starting from a (first) reference parameter 22a and reference thermal state 21a, at a first time a first difference of thermal state 23' is determined (illustrated as "Δ'" in the figure) and based thereon, a first correction value 25' is determined.

Then later, at a second time and different current thermal state (further increased temperature), again starting from the same first reference parameter 22a but this time determining and using a second thermal state difference 23'' (Δ"), a second compensation parameter 25'' is calculated. Still later resp. in view of a further increased temperature, a further update of the parameter 25‴ is updated, again based on the first calibrated value 22a, but this time based on a third, once again "updated" difference of thermal state (not shown in the figure for better clearance of depiction). Also a combination of reference values can be used, e.g. by considering calibrated parameters generated by more than one recent field calibration.

Hence, actual thermal states of the instrument are recurrently sensed using the instrument's internal temperature sensor set and based on a reference parameter 22a, recurrently compensational parameters 25', 25'', 25‴ are computed, each adapted to the actual thermal state.

As indicated in figure 5, the reference parameter (set) 22 itself on which the computation is based can be updated or changed. For example, different reference values can be applied according to different temperature ranges. That is, a first calibrated set of parameters 22a, referring to a first reference thermal state 21a, is used for a first range of actual thermal states and another calibrated set 22b -referring to a different reference thermal state 21b-for a second range of thermal states.

Likewise, such adaption to different conditions of the instrument can also be enabled in that more than one compensation model is provided, e.g. also for different ranges of thermal state or temperature. An adaption in form of choice between multiple references or compensation tools can also be made dependent on other variables such as time, for instance in that a first calibration model is used for a time period after start of operation of the instrument (e.g. a warm-up phase) and after a defined time (which can be a fixed value or itself can coupled to a sensed temperature), a second calibration model is used for determination of compensation parameters 25. A prediction covering thermal state changes within one scan can take a specific defined thermal state as reference (e.g., begin of scan, end, average; reference thermal values might be defined as average over one scan, at beginning section or at ending section of scan over at least on measured point. Also, not only separate compensations within one scan (window or full) can be applied but also from one scan to another by defining reference thermal states for each scan, with using a difference between a reference thermal state and a thermal state of at least one measured point to calculate correction within one scan, using a difference between a reference thermal state of one scan to a thermal state of a well defined scan to estimate correction between the related scan and the well defined scan, whereby a well defined scan can be a scan out of factory calibration within specific calibration testbench or a field-calibration before shipment to customer or any other field-calibration. Any change between scans and factory/field-calibrations can be covered by different prediction concepts or models.

As another example for providing different or new reference values, a calibration as in principle known in the art is executed in the field, e.g. during a scanning pause. Based on such a calibration, a renewed reference parameter 22b is provided, associated with some reference thermal state 21b. These new references are then used as basis for any further compensation, i.e., any following compensation parameters 25b for compensation of a current change of thermal state are calculated starting from the new calibrated value 22b referenced to a new reference thermal state 21b. Thus, in-field calibration may not necessarily be replaced completely by the compensation method but only may be executed considerably less often compared to known instruments while maintaining or even increasing measurement accuracy.

Thereby, the concept of determination of compensation parameters can be used to monitor if a calibration should be done as the prediction of compensational parameters might be not good enough after a certain time period or a large thermal state change (or as well be due to bumps and shocks of the instrument). Then, new reference values of the kinematic parameters could be generated in the field by a calibration procedure.

Therefore, a confidence value which indicates a quality or trustworthiness of a current thermal compensation can be deducted based on indicators such as an actual thermal state of the instrument, a parameter hysteresis, temperature gradients and/or statistic temperature data like standard deviations, average-values and their changes. Once this confidence value falls below a certain threshold, i.e. indicates low robustness of compensation, a new reference-value generation can be triggered. For example, the scanner's control unit then puts out a notice to the user who then can initiate calibration and/or, if available, triggers an automatic calibration procedure of the scan device.

Figure 5 also shows (at the right side) a manner of application of determined compensation parameters 25 for calculation of object point coordinates. The vertical lines 29 indicated time intervals for single scan lines.

As the rate of determination of actual thermal states 20 and/or of compensation parameters 25 is lower than the scan (line) rate as indicated in the figure, only for some time intervals / some scan lines 29 compensation parameters 25 are available which are determined for this particular time. For example, thermal sensor values are measured during scans with a few seconds of update rate. This stream of thermal sensor values acts as input to the compensation model. The sensor values comprise a timestamp each for allowing a synchronization with the scan lines 29 and calculation of coordinates of the points of a respective scan line, in the example lines 29a, 29b, 29c, using these parameters 25 fitting with respect to time.

For the other scan lines resp. scan points in between lines 29a-c, parameter values are interpolated, e.g. by linear fits as shown by interpolation lines 30, based on the "real" values derived from actual measuring times. In the figure, two interpolation lines 30 are shown. Scan lines 29 of a time within an interpolation line are compensated with a respective interpolation compensation value of the according time interval.

Hence, based on a time stamp stored for each scan line, for example a separate temperature value and based thereon, a compensation parameter can be interpolated for each scan line 29 based on the temperature measurements 20 registered while scanning. By the temperature values corresponding to scan lines 29a, 29b, 29c, an individual parameter set can be interpolated for every other scan line 29 in between. More generally spoken, different compensation parameters are applied to separate regions of a point cloud or groups of scanned points, based on matching time stamps, and either based on "real" sensor values or considering timely interpolated values, calculated based on such actual measurement values. Thus, measured object points belonging to a single scan line 29 or single elevation axis rotation (fast axis, second axis) are corrected with an individual either "sensed" or interpolated compensation parameter compared to other scan lines 29, and/or coordinates of scan points over a certain range of azimuth axis rotation (first axis, slow axis) are computed with timely fitting compensation values. This concept can be applied to more or less extended scan regions, e.g., group of scan lines or can even be broken down to single scan points by according high rates of determination of thermal state respectively sensor-based compensation parameter determination and/or fine interpolation of compensation parameters.

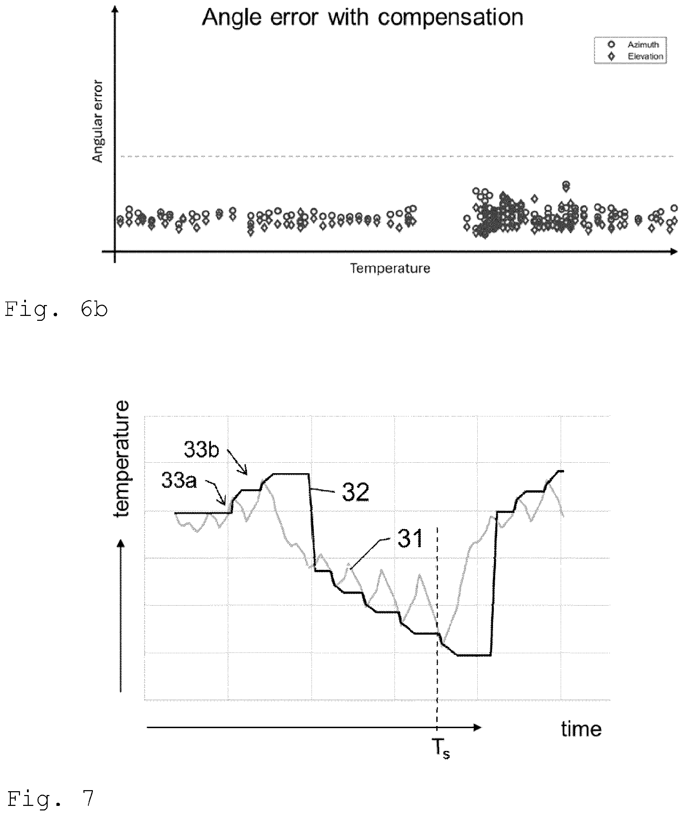

**Figs. 6a****,** **6b** show schematically a result of the above described compensation of temperature influences by using compensation parameter sets.

Figure 6a shows angular errors of surface point coordinates in dependence on thermal state variation or temperature drift of the scanning instrument without compensation whereas figure 6b shows such angle errors in dependence on thermal state variation or temperature drift of the instrument with said compensation (with arbitrary units but same scale).

As can be seen, the error range of scan point coordinates is considerably reduced when applying the inventive compensation method respectively when using an inventive measuring instrument with compensation functionality or seen otherwise, the scanning accuracy is significantly improved. The scanning precision can even be further improved as described in the following.

**Fig. 7** schematically illustrates a consideration of a history of thermal state of the instrument.

Shown is a diagram 31 of temperature values of the scanning measuring instrument sensed in course of time. Thereby, in the example, temperature is sensed even before a time Tₛ of start of a scan with the scanning instrument or in an off-mode of the instrument. Thereby, a sensing rate can be reduced compared to the rate of temperature measurement or thermal state derivation when the instrument is operating or while scanning, e.g. sensing intervals in the range of minutes instead of seconds. Also, the number of actually measuring temperature sensors can be limited, e.g., only a sub-group of thermal sensors of the whole sensor set registers values while the others are "sleeping" or only some parts of the instrument are monitored with respect to temperature, resulting in thermal states of less detail compared to the thermal states acquired during the actual scanning phase, which however is sufficient for many applications, such as hysteresis compensation described in the following, whilst sparing resources, which is in particular relevant for mobile devices.

Such permanent temperature monitoring also in advance to a scanning (and also afterwards) is advantageous (but not mandatory) for compensation of above mentioned hysteresis effects (cf. figure 2) in that a history of thermal state is available and therewith knowledge about a direction of change of thermal state. That is, at least one previous thermal state of the instrument is known and can be fed into the compensation model, previous to the current thermal state which the compensation parameter determination is primarily based on. In other words, a history of the thermal values -between a last reference point in the past until it reached the thermal state while scanning- is taken into account for parameter compensation. As said, a historical thermal state, retrieved from a less detailed temperature monitoring e.g. in an off-mode of the instrument or by dismissing some details (e.g. data of some defined sensors not relevant or of low relevancy for hysteresis compensation) when permanently storing, can be of less cardinality than the current thermal state.

Such a hysteresis thermal state or temperature value can be computed continuously in advance and then handed over as input to the compensation model. This can be done for example by introducing a "virtual generated thermal sensor" which represents a certain history of thermal state changes in the past, e.g. by a defined function of selected thermal sensors and their states in the past. In case of a machine learned model, this can be trained also with such a virtual sensor.

Thereby, as indicated in the figure by line 32, the hysteresis value or previous thermal state can be updated with some delay or buffer. For example and indicated at locations 33a, 33b in the diagram, a new hysteresis temperature is only then generated when a change of sensed temperature (line 31) or thermal state is distinct enough, e.g. above a defined range or threshold. For instance, only in case of a temperature difference more than 5°C, an update of the hysteresis temperature or a new log entry of thermal state is applied.

Although the invention is illustrated above, partly with reference to some preferred embodiments, it must be understood that numerous modifications and combinations of different features of the embodiments can be made. All of these modifications lie within the scope of the appended claims.

## Claims

1. A method for in-line compensation of thermal influences on an opto-electronic scanning measuring instrument (1), the method comprising the automatic steps of
• swivelling an instrument's optical free beam (B) over object surfaces to be scanned for measuring a respective coordinate of a multitude of surface points (O), in particular for geodetic and/or industrial measuring of stationary objects,
• providing a, particularly calibrated, set of instrument's parameters (22) associated with a defined reference thermal state (21) of the instrument (1), in particular a reference temperature field,
• measuring an actual thermal state (20) of the instrument (1),
• determining a difference between the actual thermal state (20), in particular an actual temperature field, and the reference thermal state (21),
• estimating a compensational parameter set (25) based on
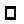 the provided parameter set (22) and
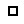 on the difference of thermal states (23),
using a compensation model (24),
• calculating the respective object point coordinate (28) based on the compensational parameter set (25).

2. The method according to claim 1,
**characterized by**
• providing a thermal state history of the instrument (1) comprising at least one previous thermal state and
• basing said estimating of a compensational parameter set (25) on the thermal state history.

3. The method according to claim 2,
**characterized by**
automatically measuring the at least one previous thermal state and computing the thermal state history before measuring of object points while the instrument (1) is in an off-mode.

4. The method according to claim 2 or 3,
**characterized by**
measuring thermal states with a lower measuring rate when not measuring object points compared to a higher measuring rate during measuring of object points.

5. The method according to any one of the previous claims, **characterized by**
providing at least two different
• compensation models (24) and/or
• calibrated parameter sets (22)
for different operational stages, in particular a warm-up stage, and/or for different ranges of current thermal states of the instrument (1).

6. The method according to any one of the previous claims, **characterized in that**
the compensation model (24) is based on machine learned association of compensational parameters and thermal states, in particular whereby the compensation model (24) is trained while operating the measuring instrument (1) in the field.

7. An opto-electronic scanning measuring instrument (1) for scanning of surfaces of stationary, in particular geodetic and/or industrial, objects by measuring respective coordinates of a multitude of surface points, the instrument (1) comprising
• a base (3),
• a radiation source (4) configured for generating optical measurement radiation,
• a deflector (7) configured for emitting the measurement radiation in form of a free beam (B) in a measuring direction (A) onto a respective surface point (O),
• at least one drive (M1, M2) for rotating the deflector (7) relative to the base (3) with respect to at least one axis for swivelling the free beam (B) over the object surface,
• at least one angle meter for determining a current rotational position of the deflector (7) relative to the base with respect to the at least one axis (V, H), indicative of the current measuring direction,
• a receiver (5) configured for detecting reflected measurement radiation (R) reflected back from the respective surface point (O),
• a control and processing unit (8) configured for calculating a respective point coordinate based on
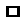 a distance derived from detected measurement radiation and
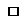 on the determined current measuring direction (A),
**characterized in that**
• the instrument (1) comprises
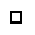 a set of sensors (6a-6d) for sensing a respective temperature of multiple components of the measuring instrument (1) influencing the measuring of the surface point coordinates and
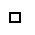 a memory having stored a compensation model (24) and a set of measuring component related parameters (22) associated with a defined reference temperature (21) of a respective component, and
• the control and processing unit (8) is configured for
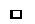 feeding the compensation model with current temperatures (20) sensed with said sensors (6a-6d) during a scanning procedure and, using the compensation model (24), estimating a compensational parameter set (25) starting from the stored parameter set based on a difference (23) of the sensed temperature to the associated reference temperature,
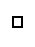 calculating the respective object point coordinate (28) based on the compensational parameter set (25) .

8. The opto-electronic scanning measuring instrument (1) according to claim 7,
**characterized in that**
• said calculating of the respective object point coordinate (28) comprises a correction of a respective raw object point scan data (26) based on the compensational parameter set (25) and/or
• said set of measuring component related parameters (22) associated with a defined reference temperature (21) of a respective component comprises calibrated parameters calibrated at the reference temperature.

9. The opto-electronic scanning measuring instrument (1) according to any one of claims 7 to 8,
**characterized in that**
• the instrument (1) is designed for swivelling the beam (B) with respect to
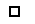 an azimuth axis (V) as said first axis and
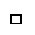 with respect to an elevation axis (H) as second axis, and
• the sensor set comprises at least one sensor for sensing temperatures affecting the measuring direction with respect to the azimuth axis (V) and the elevation axis (H), and
• the parameter set (22) comprises parameters for compensation with regard to the azimuth axis (V) and to the elevation axis (H) based on the sensed temperatures.

10. The opto-electronic scanning measuring instrument (1) according to any one of claims 7 to 9,
**characterized in that**
the control and processing unit (8) is configured for estimation of compensational parameter sets (25) individually for separate regions of scanned surface points, in particular single scan lines, based on temperatures sensed and/or interpolated at a time of measuring a respective scan region.

11. The opto-electronic scanning measuring instrument (1) according to any one of claims 7 to 10,
**characterized in that**
the compensation model (24) comprises a kinematic model (27) of the instrument (1) modelling the kinematic chain at least from the base (3) to the deflector (7) and the parameter set (22) comprises kinematic parameters of the kinematic model.

12. The opto-electronic scanning measuring instrument (1) according to any one of claims 7 to 11,
**characterized in that**
the control and processing unit (8) is configured for compensation of hysteresis effects (11', 11''), whereby the compensation model (24) comprises a function representing past temperatures sensed by at least some of the sensors (6a-6d) of the sensor set.

13. The opto-electronic scanning measuring instrument (1) according to any one of claims 7 to 12,
**characterized in that**
the control and processing unit (8) is configured for automatically determining a confidence value of the compensational parameter set (25) and triggering acquisition of a new set of parameters (22) associated with a new reference thermal state by in-the-field calibration if the confidence value is below a threshold.

14. The opto-electronic scanning measuring instrument (1) according to claim 13,
**characterized in that**
the confidence value takes into account at least one of
• a sensed temperature,
• a hysteresis of sensed temperatures,
• a difference of sensed temperatures between different sensors and/or to reference temperatures,
• a statistical evaluation over time and/or over location of sensed temperatures.

15. Computer programme product comprising programme code which is stored on a machine-readable medium, or being embodied by an electromagnetic wave comprising a programme code, and having computer-executable instructions for performing, in particular when run on the control and processing unit of the scanning measuring instrument (1) according to claim 7, the method according to any one of claims 1 to 6.
